# EUROPEAN PATENT APPLICATION

(11) **EP 0 827 122 A1**
(43) Date of publication of application: **04.03.1998**
(21) Application number: 97306548.5
(22) Date of filing: 27.08.1997
(51) Int. Cl.: G08B 5/22

(54) **A pager terminal**

(30) Priority: 27.08.1996 JP 225097/96
(71) Applicant: NEC CORPORATION, Tokyo (JP)
(72) Inventor: Hasegawa, Kazuhiko, Kakegawa-shi, Shizuoka (JP)
(74) Representative: Orchard, Oliver John

(57) **Abstract**

For informing a user of a pager terminal for receiving message information having a message serial number of the serial numbers of missing message information, the pager terminal has a missing message indicator and includes, a message status memory (17) with a message reception table having a reception confirmation flag area and a reception failure flag area for each of the possible message serial numbers. A logic '1' flag is set in the reception confirmation flag area corresponding to the message serial number N of the message lastly stored. When a message having a message number M is newly received, the numbers M and N are compared. When M ≠ N + 1, logic '1' flags are set in all the reception failure flag areas corresponding to the message serial numbers from N + 1 to M - 1 for indicating the failure of the reception of these messages.

## Description

The present invention relates to a pager terminal. There will be described below, by way of example in illustration of the invention, a pager terminal having a missing message indicator for informing a user of message numbers appended to messages to be received that have been missed.

There is a "message serial number service", which is offered as a supplementary service to users of high grade pager systems, such as the FLEX-TD (Time Diversity) system. In the message serial number service, a message number, which is appended serially to each call of a specified user of the pager system, is appended to each message information. The message number is useful for transmitting message information reliably to the specified user. However, it is important to provide an effective measure to make use of the message number for detecting and indicating any failure of reception also at a pager terminal receiving the message number.

A previously proposed method for preventing the failure of reception in this type of pager system, is described in a Japanese patent application entitled "Method for detecting reception failure of transmitted messages" and laid open as a Provisional Publication No. 119725/92.

In the previous proposal, the transmitting station transmits, periodically to each pager terminal, message serial number information, including information of the calling number, the date information, the message serial number at the present time, and the identification information indicating that the message is the message serial number information, besides ordinary message information which is transmitted together with the calling number, the date information, a message serial number counted from the beginning of the date and the identification information indicating that the message information is an ordinary message information.

At each pager terminal receiving the message information there is a discrimination as to whether the received message information is the ordinary message information, or the message serial number information. When it is the ordinary message information, an internal count number is incremented and stored with the date information. When it is the message serial number information, the message serial number of the information is compared with the internal count number for detecting whether or not there is any missing message of which the user is to be informed by means of an alarm through a speaker.

As described above, only when the message serial number information, which is transmitted periodically from the transmitting station for reporting the current message serial number, is received, is the current message serial number compared with the internal count number incremented at each reception of the ordinary message information, in the previous proposal, and an alarm sounded through the speaker to report the failure of the reception to the user when the two numbers being compared do not agree.

Therefore, although the user is informed that there has been a failure of reception, he cannot decide, at that instant, which one of the messages which has been missed and is still to be received. The missing message information might contain important information for the user.

Therefore, a feature of a pager terminal to be described below by way of example in illustration of the present invention is that the serial message numbers of the missing messages are notified to the user by means of a display device for reliably minimising the likelihood of failure to receive messages that are important to the user.

A particular pager terminal to be described below, by way of example in illustration of the invention, for receiving message information transmitted from a transmitting station with a message serial number appended sequentially to each call for the pager terminal in a certain period, has a missing message indicator and includes a message memory for storing the message information in order of receipt, together with the message serial number, a message status memory prepared with a message receipt table having a reception confirmation flag area and a reception failure flag area for each of the message serial numbers, predetermined as possible to be appended in the certain period, wherein a logic '1' flag is set in the reception confirmation flag area corresponding to the message information lastly received and a logic '1' flag is set in the reception failure flag area corresponding to each of the message serial numbers of the message information missed to be received, and control means for searching for the message serial number of the message information lastly received with reference to the message receipt table when message information is newly received, comparing the message serial number of the message information lastly received with the message serial number of the message information newly received, setting a logic '1' flag in the reception failure flag area corresponding to each of the message serial numbers following the message serial number of the message information lastly received and preceding the message serial number of the message information newly received when the message serial number of the message information newly received differs by more than one from the message serial number of the message information lastly received, changing the logic '1' flag in the reception confirmation flag area corresponding to the message serial number of the message information lastly received to '0' and setting a logic '1' flag in the reception confirmation flag area corresponding to the message serial number of the message information newly received, informing the user of each of the message serial numbers, and setting a logic '1' flag in the reception failure flag area when there is any.

Therefore, the user can easily and reliably request re-transmission of the missing messages corresponding to the message serial numbers indicated by the missing message indicator.

Arrangements illustrating the invention, which is characterised in the appended claims, will now be described, by way of example with reference to the accompanying drawings in which:-
Fig. 1 is a block schematic diagram for use in illustrating a principal configuration of a pager terminal,
Fig. 2 is a flowchart illustrating the operational flow of a message receiving process employed in the embodiment of Fig. 1,
Fig. 3(A) is a schematic diagram illustrating a message receipt table prepared in the message status memory 17 of Fig. 1,
Fig. 3(B) is another schematic diagram illustrating the message receipt table, and
Fig. 4 is a schematic diagram illustrating message information stored in the message memory 16 of Fig. 1.

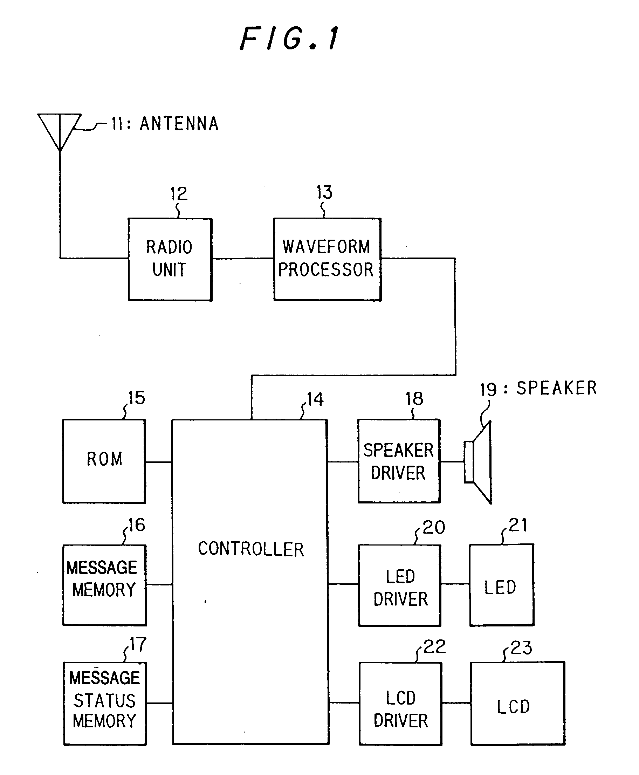

Referring to Fig. 1, the pager terminal includes an antenna 11, a radio unit 12, a waveform processor 13, a controller 14, a ROM (Read Only Memory) 15, a message memory 16, a message status memory 17, a speaker 19 with a speaker driver 19, an LED (Light Emitting Diode) 21 with an LED driver 20, and an LCD (Liquid Crystal Display) 23 with an LCD driver 22.

The radio unit 12 receives, amplifies and demodulates selective calling signals received via the antenna 11. The waveform processor 13 processes and converts the demodulated signals into a predetermined signal format. The ROM 15 stores the call number of the pager terminal. The message memory 16 consisting of a RAM (Random Access Memory) stores message information received with serial message numbers in order of reception. In the message status memory 17 (RAM), there is a message reception table used for detecting message serial numbers of missing messages. The speaker 19 reports message arrivals and gives an alarm of the failure of reception. The LED 21 indicates the message arrivals. The LCD 23 displays the message information and the message serial numbers of the missing messages. The controller 14 controls the whole system of the pager terminal.

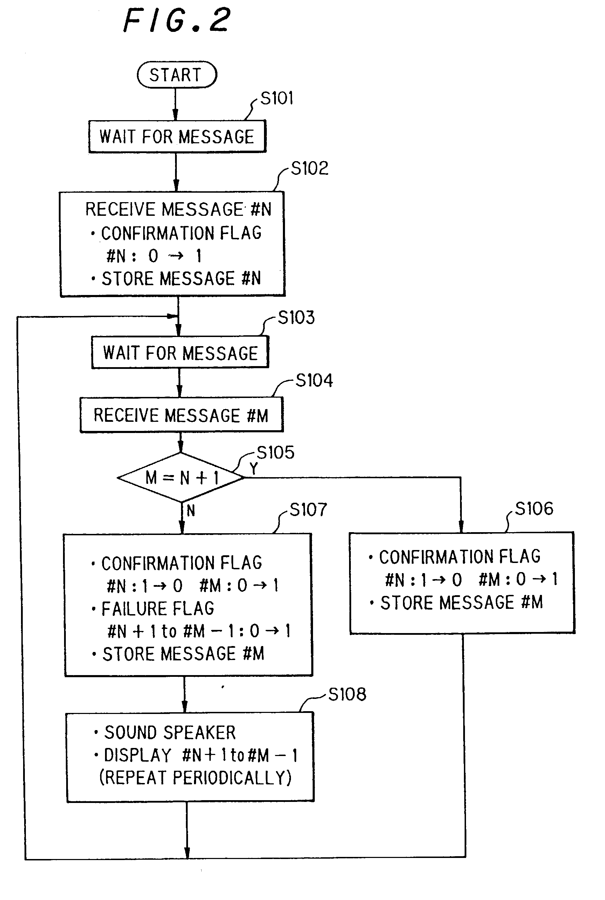

The operation of the pager terminal of Fig. 1 will now be described with reference to Figs. 2 to 4.

When a call signal is received by the antenna 11, it is amplified and demodulated in the radio unit 12, and converted into the predetermined signal format in the waveform processor 13 to be supplied to the controller 14.

The controller 14 compares the call number in the output of the waveform processor 13 to the contents of the ROM 15 consisting of a programmable ROM. When there is coincidence in the comparison, the controller 14 drives the speaker 19 through the speaker driver 18, and lights the LED through the LED driver 21 to report the arrival of a message forwarded to the user.

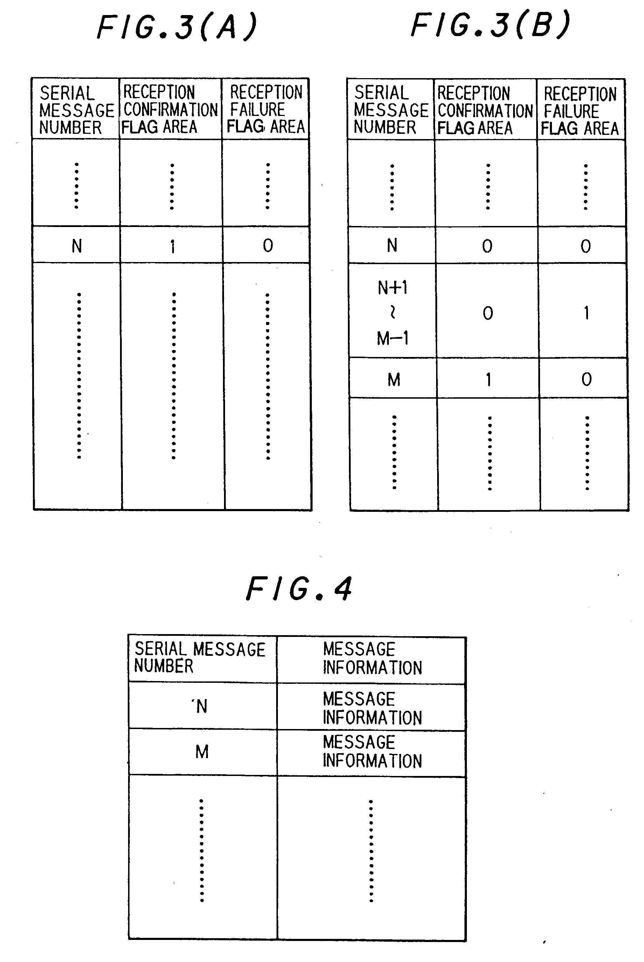

When a message information with a message serial number N added is received, the controller 14 sets a flag of logic '1' at a reception confirmation flag area corresponding to the message serial number N of the message reception table in the message status memory 17 (refer to Fig. 3(A)), and writes the message serial number and the message information correspondingly in the message memory 16, as shown in Fig. 4.

Then, when a message information with a different serial number is received, the controller 14 searches the reception confirmation flag areas of the message reception table, and the message serial number of which a logic '1' flag has been set in the reception confirmation flag area, that is the message serial number of the lastly received message information is compared with the message serial number of the message information newly received.

When the two message serial numbers which have been compared show continuity or coincidence, the logic '1' flag in the reception confirmation flag area of the message serial number of the former message is reset to logic '0', and a flag of logic '1' is set in the reception confirmation flag area corresponding to the message serial number of the newly received message. After the procedure, the newly received message information is written with its message serial number in a field following the field of the last stored message information as shown in Fig. 4.

When the two message serial numbers which have been compared do not show continuity or coincidence, logic '1' flags are set to all reception failure flag areas corresponding to message serial numbers in a range from the next of the message number having logic '1' flag in the reception confirmation flag area, to the message serial number preceding that of the newly received message information of the message reception table.

After the procedure, the newly received message information is written with its message serial number in a field following the field of the last stored message information in the message memory 16.

Then, all the message serial numbers corresponding to the logic '1' flags in the reception failure flag areas of the message reception table of the message status memory 17 are displayed on the LCD 23 through the LCD driver 22, and the speaker 19 is driven through the speaker driver 18 to give an alarm to the user of the existence of a failure of receipt, with a frequency different from that for reporting the arrival of a message.

The user of the receiver, notified of the existence of a failure of receipt by the sounding of the speaker 19 and the display on the LCD 23, operates an operation panel (not shown in the drawings) in a predetermined way to send a request, to the transmitting station, for the re-transmission of the missing messages corresponding to the message serial numbers indicated on the LCD 23.

In an initialization, which is performed automatically at the same time with the initialization at the transmitting station of the message serial number, at 0:00 a.m., for example, the controller 14 resets all the flags in the reception confirmation flag area and the reception failure flag areas to logic '0'.

The message information stored in the message memory 16 shown in Fig. 4 is read-out and displayed on the LCD 23 through the LCD driver 22 according to the user's predetermined operation of the operation panel (not shown in the drawings).

Now, detailed flow of the message receiving processing will be described referring to the flowchart of Fig. 2 together with Fig. 1, Fig. 3(A) and Fig. 3(B).

When a power switch (not shown in the drawing) is closed in the receiver for activating the pager terminal, the message status memory 17 is initialized and all the reception confirmation flag areas and the reception failure flag areas are reset with flags of logic '0', and the receiver enters into a waiting state (at step S101 of Fig. 2).

Assume that message information having a message serial number N, for example, transmitted from the transmitting station (not shown in the drawings), is received in the waiting state. When the controller 14 detects coincidence between the call number of the transmitted message information and the call number stored in the ROM 15, a flag of logic '0' in the reception confirmation flag area of the message serial number N of the message status memory 17, is changed to a flag of logic '1' (the flag in the reception failure flag area remains unchanged). The message serial number N and the message information are written at the top of the message memory 16 (at step S102), and the system reenters into the waiting state (at step S103).

Here, it is noted that the pager terminal is driven by a battery and the power switch is kept closed during the battery is available and that the message serial number N of the message information received firstly after the first, or the daily initialization should be 0, in general.

When another message signal of the same call number having a message serial number M, for example, is received (at step S104), the controller 14 searches for a logic '1' flag in the reception confirmation flag area of the message reception table. So, the message serial number N, having the logic '1' flag in the reception confirmation flag area, is detected and is compared with the message serial number M of the newly received message information in order to check whether there is a coincidence or continuity between the two message serial numbers (at step S105).

When M = N + 1 (indicating the continuity or coincidence) is obtained as the result of the comparison, it is judged that there is no failure of reception. The flag of logic '1' in the reception confirmation flag area of the message serial number N of the message reception table is changed to a flag of logic '0', a flag of logic '0' in the reception confirmation flag area of the message serial number M is changed to a flag of logic '1', and the message serial number M and the message information are written in the message memory 16 following the message serial number N and its message information (at step S106), the process flow returning to step S103.

When M ≠ N + 1 is detected at step S105 as the result of the comparison, it is judged that there is a failure of reception. The flag of logic '1' in the reception confirmation flag area of the message serial number N of the message reception table is changed to a flag of logic '0'. Logic '1' flags are set in all the reception failure flag areas corresponding to the message serial numbers from N + 1 to M - 1, as illustrated in Fig. 3(B). The flag of logic '0' in the reception confirmation flag area of the message serial number M is changed to a flag of logic '1'. The message serial number M and the message information are written in the message memory 16 following the message serial number N and its message information (at step S107).

The controller 14 displays the message serial numbers from N + 1 to M - 1 on the LCD 23 through the LCD driver 22, and causes the speaker 19 to produce a sound via the speaker driver 18 at the frequency for giving an alarm of a reception failure (at step S108), the frequency being different from the frequency for reporting the message arrival. After the user is thus informed of the occurrence of a failure of reception, the process flow returns to the waiting state at step S103.

As heretofore described, there is provided a reception confirmation flag area and a reception failure flag area for each message serial number (from 0 to 63, for example) in the message reception table of the message status memory 17 of the embodiment. When message information having a message serial number is received from the transmitting station, a logic '1' flag is set in the reception confirmation flag area corresponding to the message serial number of the newly received message information, indicating the message serial number of the last received message information. When a message having a different message serial number is received, the message serial number of the newly received message is compared to the message serial number having a logic '1' flag in the reception confirmation flag area of the message reception table. The message serial numbers of the missing messages are identified from the comparison. Logic '1' flags are set in the reception failure flag areas corresponding to the message numbers of the missing messages. The flag in the reception confirmation flag area corresponding to the last stored message is changed from logic '1' to logic '0', and the flag in the reception confirmation flag area corresponding to the newly received message information is changed from logic '0' to logic '1', and the process flow returns to a state of waiting for the next message information.

Therefore, the message serial numbers of the missing message information can be easily identified in the embodiment.

The contents of the message reception table, that is, the message serial numbers corresponding to logic '1' flags in the reception failure flag areas, are displayed on the LCD 23. The occurrence of the reception failure is alarmed by sounding the speaker 19 at a predetermined frequency. Thus, the user can know easily the message serial numbers of the missing message information enabling re-transmission thereof to be requested.

Therefore, the user can reliably request re-transmission of the missing messages corresponding to the message serial numbers reported as the messages of the failure of reception.

Further, the message serial numbers of the missing messages may be alarmed periodically, or they may be displayed according to a request of the user by a predetermined command input, since information of the message serial numbers of the missing messages is always revised and stored in the message reception table, in the embodiment.

It will be understood that although particular arrangements have been described, by way of example in illustration of the invention, variations and modifications thereof, as well as other embodiments may be made within the scope of the protection sought by the appended claims.

## Claims

1. A pager terminal for receiving message information transmitted from a transmitting station with a message serial number appended sequentially to each call for the pager terminal in a certain period, the pager terminal having a missing message indicator (14 to 23) for informing a user of the pager terminal of message serial numbers appended to message information which has not been received referring to the message serial number of the message information lastly received and the message serial number of the message information newly received.

2. A pager terminal as claimed in claim 1 wherein the missing message indicator (14 to 23) includes a message memory (16) for storing the message information in order of reception together with the message serial number, a message status memory (17) prepared with a message reception table having a reception confirmation flag area and a reception failure flag area for each of the message serial numbers predetermined as being possible to be appended in the certain period, wherein a logic '1' flag is set in the reception confirmation flag area corresponding to the message information lastly received, and a logic '1' flag is set in the reception failure flag area corresponding to each of the message serial numbers of the message information which has not been received, and control means (14) for searching the message serial number of the message information lastly received, referring to the message reception table when the message information is newly received, comparing the message serial number of the message information lastly received with the serial message number of the message information newly received, setting a logic '1' flag in the reception failure flag area corresponding to each of the message serial numbers following the message serial number of the message information lastly received and preceding the message serial number of the message information newly received when the message serial number of the message information newly received differs more than one to the message serial number of the message information lastly received, changing the logic '1' flag in the reception confirmation flag area corresponding to the message serial number of the message information lastly received to '0', setting a logic '1' flag in the reception confirmation flag area corresponding to the message serial number of the message information newly received, and informing the user of each of the message serial numbers whereof a logic '1' flag is set in the reception failure flag area when there is any.

3. A pager terminal as claimed in claim 1 wherein the missing message indicator (14 to 23) informs the user periodically of the message serial numbers appended to the message information which has not been received.

4. A pager terminal as claimed in claim 1 wherein the missing message indicator (14 to 23) informs the user of the message serial numbers appended to the message information which has not been received according to a request of the user.
